# EUROPEAN PATENT SPECIFICATION

(11) **EP 2 919 304 B1**
(45) Date of publication and mention of the grant of the patent: **11.01.2017**
(21) Application number: 13853374.0
(22) Date of filing: 25.10.2013
(51) Int. Cl.: H01M 4/58, H01M 4/485, H01M 10/052, H01M 10/054

(54) **POSITIVE ELECTRODE ACTIVE MATERIAL AND HYBRID ION BATTERY**
AKTIVMATERIAL FÜR POSITIVE ELEKTRODE UND HYBRIDIONENBATTERIE
MATÉRIAU ACTIF D'ÉLECTRODE POSITIVE ET BATTERIE À IONS HYBRIDES

(30) Priority: 08.11.2012 JP 2012246637
(43) Date of publication of application: 16.09.2015
(73) Proprietor: Toyota Jidosha Kabushiki Kaisha, Toyota-shi, Aichi 471-8571 (JP)
(72) Inventor: NOSE, Masafumi, Toyota-shi Aichi 471-8571 (JP)
(74) Representative: Hart-Davis, Jason
(86) International application number: PCT/JP2013/079015
(87) International publication number: WO 2014/073400

(56) References cited:
- WO-A1-2013/031331
- JP-A- 2005 183 395
- JP-A- 2010 260 761
- JP-A- 2010 260 761
- JP-A- 2011 049 126
- HYUNGSUB KIM ET AL: "New Iron-Based Mixed-Polyanion Cathodes for Lithium and Sodium Rechargeable Batteries: Combined First Principles Calculations and Experimental Study", JOURNAL OF THE AMERICAN CHEMICAL SOCIETY, vol. 134, no. 25, 27 June 2012 (2012-06-27), pages 10369-10372, XP055049459, ISSN: 0002-7863, DOI: 10.1021/ja3038646
- FRANCISCA SANZ ET AL: "Crystal Structure, Magnetic Properties, and Ionic Conductivity of a New Mixed-Anion Phosphate Na 4 Ni 5 (PO 4 ) 2 (P 2 O 7 ) 2", CHEMISTRY OF MATERIALS, vol. 11, no. 10, 1 October 1999 (1999-10-01), pages 2673-2679, XP055049856, ISSN: 0897-4756, DOI: 10.1021/cm981105s
- SANZ F ET AL: "Synthesis, Structural Characterization, Magnetic Properties, and Ionic Conductivity of Na4MII3(PO4)2(P2O7) (MII = Mn, Co, Ni)", CHEMISTRY OF MATERIALS, AMERICAN CHEMICAL SOCIETY, US, vol. 13, no. 4, 1 April 2001 (2001-04-01), pages 1334-1340, XP002742401, ISSN: 0897-4756, DOI: 10.1021/CM001210D [retrieved on 2001-03-15]
- HYUNGSUB KIMET ET AL.: 'New Iron-Based Mixed- Polyanion Cathodes for Lithium and Sodium Rechargeable Batteries: Combined First Principles Calculations and Experimental Study' JOURNAL OF THE AMERICAN CHEMICAL SOCIETY vol. 134, no. 25, 27 June 2012, pages 10369 - 10372, XP055049459

## Description

### Technical Field

The present invention relates to a cathode active material which is used for a hybrid ion battery of Li ions and Na ions, and operates at a high potential.

### Background Art

In accordance with a rapid spread of information relevant apparatuses and communication apparatuses such as a personal computer, a video camera and a portable telephone in recent years, the development of a battery excellent as a power source thereof has been emphasized. The development of a lithium ion battery and a sodium ion battery as a battery used for an electric automobile or a hybrid automobile has been advanced, for example, in the automobile industry in the field except information relevant apparatuses and communication relevant apparatuses. Na exists so abundantly as compared with Li that a sodium ion battery has the advantage that lower costs are easily achieved as compared with a lithium ion battery.

Also, a hybrid ion battery in which two ions (such as Li ions and Na ions) move in the battery has been researched. Such a hybrid ion battery ordinarily has a cathode active material layer containing a cathode active material, an anode active material layer containing an anode active material, and an electrolyte layer formed between the cathode active material layer and the anode active material layer. For example, in Patent Literature 1, Na₂MPO₄F (M is Fe, Mn or compounds thereof) usable as a cathode active material of a hybrid ion battery is disclosed. Also, in Non Patent Literatures 1 to 3, various Na-containing compounds usable as a cathode active material of a hybrid battery are disclosed. Specifically, Na₂FePO₄F, NaVPO₄F and Na₃V₂(PO₄)₂F₃ are described.

### Citation List

### Patent Literature

Patent Literature 1: Japanese Patent Application Publication (JP-A) No. 2010-260761

### Non Patent Literature

Non Patent Literature 1: B. L. Ellis et al., "A multifunctional 3.5 V iron-based phosphate cathode for rechargeable batteries", Nature Materials Vol. 6 October 2007
Non Patent Literature 2: Jianqing Zhao et al., "A novel sol-gel synthesis route to NaVP04F as cathode material for hybrid lithium ion batteries", Journal of Power Sources, 195 (2010) 6854-6859
Non Patent Literature 3: J. Barker et al. , "Li4/3Ti5/304 // Na3V2(PO4)2F3: An Example of a Hybrid-Ion Cell Using a Non-graphitic Anode", Journal of Electrochemical Society, 154 (9) A882-A887 (2007)

### Summary of Invention

### Technical Problem

Generally, a cathode active material preferably operates at a high potential for the purpose of providing higher voltage of a battery. Thus, in view of the actual circumstances, the main object of the present invention is to provide a cathode active material which is used for a hybrid ion battery of Li ions and Na ions, and operates at a high potential.

### Solution to Problem

In order to solve the problems, the present invention provides a cathode active material used for a hybrid ion battery of a Li ion and a Na ion, comprising an Na₄M₃ (PO₄)₂P₂O₇ crystal phase (M is at least one kind of Ni, Co, Mn, Fe, V, Cr, Cu and Zn).

According to the present invention, the inclusion of the Na₄M₃ (PO₄) ₂P₂O₇ crystal phase allows the cathode active material which is usable in a hybrid ion battery of Li ions and Na ions and operates at a high potential.

Also, the present invention provides a hybrid ion battery comprising a cathode active material layer containing a cathode active material, an anode active material layer containing an anode active material, and an electrolyte layer formed between the cathode active material layer and the anode active material layer, characterized in that the cathode active material is a cathode active material containing an Na₄₋ₓLiₓM₃(PO₄)₂P₂O₇ crystal phase (0 ≤ x < 4, M is at least one kind of Ni, Co, Mn, Fe, V, Cr, Cu and Zn), the anode active material is an active material capable of storing and releasing Li ions, and the electrolyte layer contains at least Li ions.

According to the present invention, the use of the cathode active material described above allows the high-voltage hybrid ion battery as compared with a conventional hybrid ion battery (such as Patent Literature 1).

In the invention, the anode active material is preferably a Li metal. The reason therefor is to allow the higher-voltage hybrid ion battery.

In the invention, the anode active material is preferably lithium titanate. The reason therefor is to allow the hybrid ion battery excellent in safety.

### Advantageous Effects of Invention

A cathode active material of the present invention produces the effect that it is usable in a hybrid ion battery of Li ions and Na ions, and operates at a high potential.

### Brief Description of Drawings

FIG. 1 is a schematic cross-sectional view showing an example of a hybrid ion battery of the present invention.
FIG. 2 is a graph showing charge-discharge properties of an evaluation battery obtained in Example 1.
FIG. 3 is a graph showing charge-discharge properties of an evaluation battery obtained in Example 2.
FIG. 4 is a graph showing charge-discharge properties of an evaluation battery obtained in Example 3.
FIG. 5 is a graph showing charge-discharge properties of an evaluation battery obtained in Example 4.
FIG. 6 is a graph showing charge-discharge properties of an evaluation battery obtained in Example 5.
FIG. 7 is a graph showing charge-discharge properties of an evaluation battery obtained in Example 6.
FIG. 8 is an XRD measurement result of an evaluation battery (before charging and discharging) each obtained in Examples 1 to 3.
FIG. 9 is an XRD measurement result of an evaluation battery (after charging and discharging twice) each obtained in Examples 1 to 3.

### Description of Embodiments

A cathode active material and a hybrid ion battery of the present invention are hereinafter described in detail.

### A. Cathode active material

First, a cathode active material of the present invention is described. The cathode active material of the present invention is a cathode active material used for a hybrid ion battery of Li ions and Na ions, comprising an Na₄M₃(PO₄)₂P₂O₇ crystal phase (M is at least one kind of Ni, Co, Mn, Fe, V, Cr, Cu and Zn).

According to the present invention, the inclusion of the Na₄M₃(PO₄)₂P₂O₇ crystal phase allows the cathode active material which is usable in a hybrid ion battery of Li ions and Na ions, and operates at a high potential. Here, in the hybrid ion battery, the mechanism by which Li ions and Na ions are intercalated into and desorbed from the Na₄M₃(PO₄)₂P₂O₇ crystal phase is not necessarily revealed but is guessed to be that both of the ions are cointercalated into and codesorbed from an ion channel in which the Na ions in the crystal phase are arrayed. Thus, the inclusion of the Na₄M₃(PO₄)₂P₂O₇ crystal phase is conceived to allow the cathode active material to be used for the hybrid ion battery described above.

Also, the cathode active material of the present invention has the advantage that it is operable at a higher potential as compared with a conventional cathode active material usable for the hybrid ion battery. As a result, the use of the cathode active material of the present invention offers the advantage that it allows the hybrid ion battery with larger potential difference (voltage). Here, examples of the conventional cathode active material usable for the hybrid ion battery include Na-containing compounds such as Na₂MnPO₄F, Na₂FePO₄F and NaVPO₄F (for example, Patent Literature 1 and Non Patent Literatures 1 to 3). These Na-containing compounds operate at such a low potential as compared with the Na₄M₃(PO₄)₂P₂O₇ crystal phase in the present invention that the potential difference of the hybrid ion battery described above decreases and the energy density thereof lowers.

The cathode active material of the present invention has the Na₄M₃(PO₄)₂P₂O₇ crystal phase. The presence of "Na₄M₃(PO₄)₂P₂O₇ crystal phase" in the present invention may be confirmed by X-ray diffraction (XRD) measurement, for example. The presence of the crystal phase with these compositions may be confirmed by XRD measurement. For example, the presence of the Na₄M₃ (PO₄) ₂P₂O₇ crystal phase may be confirmed by ordinarily having a characteristic peak in 2θ = 9.8°, 16°, 17°, 23.9°, 29.5°, 32.2°, 34°, and 37°. Incidentally, this peak position may fluctuate within a range of ± 1°.

The cathode active material is preferably large in the ratio of the Na₄M₃(PO₄)₂P₂O₇ crystal phase; specifically, the cathode active material preferably contains the Na₄M₃(PO₄)₂P₂O₇ crystal phase mainly. Here, "containing the Na₄M₃(PO₄)₂P₂O₇ crystal phase mainly" indicates that the ratio of the Na₄M₃(PO₄)₂P₂O₇ crystal phase is the largest in all crystal phases contained in the cathode active material. The ratio of the Na₄M₃(PO₄)₂P₂O₇ crystal phase contained in the cathode active material is preferably 50 mol% or more, more preferably 60 mol% or more, and far more preferably 70 mol% or more. Also, the cathode active material may be composed only of the Na₄M₃(PO₄)₂P₂O₇ crystal phase (a single-phase active material). Incidentally, the ratio of the Na₄M₃(PO₄)₂P₂O₇ crystal phase contained in the cathode active material may be determined by a quantitative analysis method through X-ray diffraction (such as a quantification method by R-value and a Rietveld method).

M contained in the Na₄M₃(PO₄)₂P₂O₇ crystal phase is ordinarily at least one kind of Ni, Co, Mn, Fe, V, Cr, Cu and Zn, preferably at least one kind of Ni, Co and Mn above all. The reason therefor is to allow the cathode active material operable at a high potential. Also, the M is not particularly limited as long as the M has at least one kind of the elements described above, but may be only one kind of the elements described above or a combination of the elements described above and other elements. Specifically, in the case where the M has Co, the M may be only Co, a combination of Co and Mn, or a combination of Co, Mn and Ni.

In the case where the M is a combination of the plural elements described above, when an element as the main component is regarded as M_{A}, M_{A}/M (molar ratio) in the general formula is, for example, preferably 0.5 or more, more preferably 0.6 or more, far more preferably 0.7 or more, and particularly 0.8 or more. Examples of such a crystal phase include an Na₄Co_{2.4}Mn_{0.6}(PO₄)₂P₂O₇ crystal phase and an Na₄Co_{2.4}Mn_{0.3}Ni_{0.3}(PO₄)₂P₂O₇ crystal phase.

Also, the cathode active material of the present invention preferably has a crystal structure assigned to a space group Pn2₁a. The reason therefor is conceived to be that in the case of having a crystal structure assigned to the above-described space group, all Na ions in the crystal structure are arrayed in any direction of a axis, b axis and c axis so as to be very advantageous to the conduction of the Na ions.

The shape of the cathode active material of the present invention is preferably a particulate shape, for example. Also, the average particle diameter thereof (D₅₀) is preferably, for example within a range of 1 nm to 100 µm, above all within a range of 10 nm to 30 µm.

A method of producing the cathode active material of the present invention is not particularly limited as long as the method allows the active material described above, but examples thereof include a method (a solid-phase method) for preparing a raw material mixture in which starting materials such as an Na source, an M source and a P source are mixed at a predetermined ratio to burn the raw material mixture under an air atmosphere. Each of the starting materials is not particularly limited but may be properly selected. Each of the starting materials may be used singly by one kind or by a combination of two kinds or more. Also, one of the starting materials may contain two kinds or more of Na, M and P.

The Na source is not particularly limited as long as the Na source is a compound containing Na, and examples thereof include Na₄P₂O₇, Na₂CO₃, Na₂O, Na₂O₂, Na₃PO₄ and CH₃COONa.

The M source is not particularly limited as long as the M source is a compound containing M. In the case where M is Co, examples thereof include CoCO₃, (CH₃COO)₂Co, CoO and Co₂O₃. Also, in the case where M is Mn, examples thereof include MnCO₃ and (CH₃COO)₂Mn. In the case where M is Ni, examples thereof include (CH₃COO)₂Ni, NiCO₃ and NiO. Also, in the case where M is Fe, examples thereof include FeO, Fe₂O₃ and Fe(NO₃)₃. In the case where M is V, examples thereof include V₂O₃, V₂O₅ and NH₄VO₃. Also, in the case where M is Cr, examples thereof include Cr₂O₃ and Cr(NO₃)₃. In the case where M is Cu, examples thereof include (CH₃COO)₂Cu and CuO. Also, in the case where M is Zn, examples thereof include (CH₃COO)₂Zn and ZnO.

The P source is not particularly limited as long as the P source is a compound containing P, and examples thereof include Na₄P₂O₇, NH₄H₂PO₄, (NH₄)₂HPO₄, H₃PO₄, Na₂P₂O₇ and Na₃PO₄.

The burning conditions are not particularly limited as long as the conditions allow the intended cathode active material. Specifically, the burning temperature is preferably, for example, within a range of 500°C to 800°C, above all, within a range of 550°C to 750°C. The reason therefor is that too low burning temperature brings a possibility of not causing a solid-phase reaction, whereas too high burning temperature brings a possibility of producing an unnecessary crystal phase. Also, the burning time is preferably, for example, within a range of 1 hour to 100 hours, above all, within a range of 15 hours to 50 hours. The air atmosphere as an atmosphere in burning indicates an oxygen-containing gas atmosphere.

Also, in a method of producing the cathode active material of the present invention, provisional burning may be performed before performing burning (regular burning) on the burning conditions. Incidentally, the provisional burning conditions are not particularly limited as long as the conditions allow the intended cathode active material. Specifically, the temperature for the provisional burning is ordinarily lower than the temperature for the regular burning, and may be within a range of 150°C to 500°C, preferably 180°C to 450°C, more preferably 250°C to 350°C. The provisional burning time is not particularly limited but may be properly determined, for example, approximately 1 hour to 5 hours. Also, the air atmosphere as an atmosphere in the provisional burning is the same as the above-described burning.

Also, examples of another method of producing the cathode active material of the present invention include the following method. That is to say, it is the method (sol-gel method) in which a raw material mixture in which starting materials such as an Na source, an M source and a P source are mixed at a predetermined ratio is prepared, dissolved and heated in an acid solution with a gelling agent to prepare gel and next burn the obtained mixture (the gel) under an air atmosphere.

The starting materials such as an Na source, an M source and a P source used in the sol-gel method may be soluble in an acid solution and may be properly selected. Each of the starting materials may be used singly by one kind or by a combination of two kinds or more. Also, one of the starting materials may contain two kinds or more of Na, M and P.

Specific examples of the Na source include Na₄P₂O₇, Na₂CO₃, Na₂O, Na₂O₂ and CH₃COONa.

Also, the M source is not particularly limited as long as the M source is a compound containing M, but in the case where M is Co, examples thereof include CoCO₃, (CH₃COO)₂Co and Co₂O₃. Also, in the case where M is Mn, examples thereof include MnCO₃, MnO, MnO₂ and (CH₃COO)₂Mn. In the case where M is Ni, examples thereof include (CH₃COO)₂Ni. Also, in the case where M is Fe, examples thereof include Fe(NO₃)₃, FeC₂O₄ and (CH₃COO)₃Fe. In the case where M is V, examples thereof include V₂O₃ and V₂O₅. Also, in the case where M is Cr, examples thereof include Cr(NO₃)₃. In the case where M is Cu, examples thereof include (CH₃COO)₂Cu. Also, in the case where M is Zn, examples thereof include (CH₃COO)₂Zn.

Examples of the P source include NH₄H₂PO₄, (NH₄)₂HPO₄ and H₃PO₄.

Examples of the gelling agent include glycolic acid. Also, examples of the acid solution include a nitric acid aqueous solution. The heating temperature in preparing the gel is not limited as long as it allows each of the compounds to be dissolved in the acid solution and allows the gel to be prepared, and may be determined at 60°C to 120°C, for example. The burning temperature of the gel may be determined, for example, at 500°C to 800°C, preferably 600°C to 750°C. The air atmosphere in burning the gel is the same as the air atmosphere in the solid-phase method.

### B. Hybrid ion battery

Next, a hybrid ion battery of the present invention is described. The hybrid ion battery of the present invention is a hybrid ion battery comprising a cathode active material layer containing a cathode active material, an anode active material layer containing an anode active material, and an electrolyte layer formed between the cathode active material layer and the anode active material layer, characterized in that the cathode active material is a cathode active material containing an Na₄₋ₓLiₓM₃(PO₄)₂P₂O₇ crystal phase (0 ≤ x < 4, M is at least one kind of Ni, Co, Mn, Fe, V, Cr, Cu and Zn), the anode active material is an active material capable of storing and releasing Li ions, and the electrolyte layer contains at least Li ions.

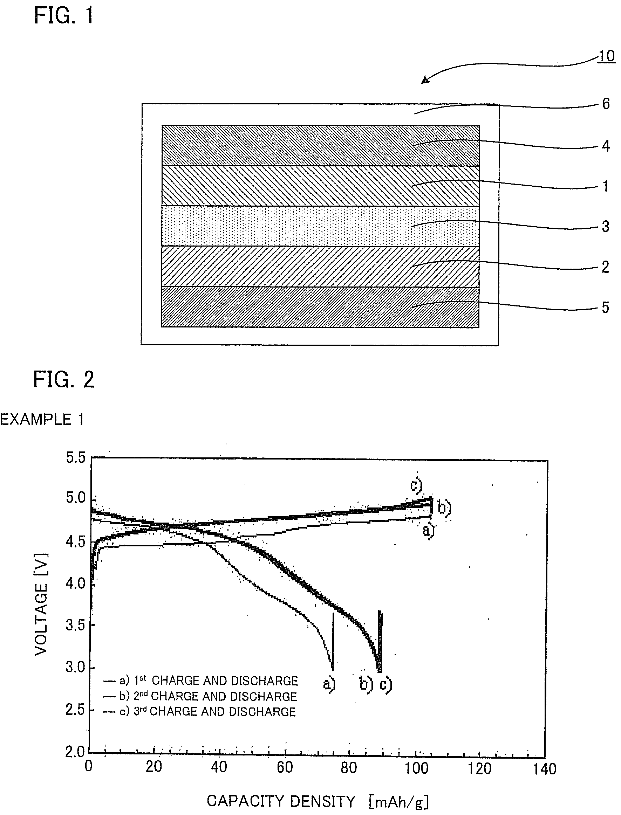

FIG. 1 is a schematic cross-sectional view showing an example of the hybrid ion battery of the present invention. A hybrid ion battery 10 shown in FIG. 1 comprises a cathode active material layer 1, an anode active material layer 2, an electrolyte layer 3 formed between the cathode active material layer 1 and the anode active material layer 2, a cathode current collector 4 for collecting the cathode active material layer 1, an anode current collector 5 for collecting the anode active material layer 2, and a battery case 6 for storing these members. The hybrid ion battery of the present invention is characterized in that the cathode active material contained in a cathode active material layer is the cathode active material described above and the anode active material contained in an anode active material layer is an active material capable of storing and releasing Li ions. Also, the hybrid ion battery of the present invention is characterized in that the electrolyte layer contains at least Li ions.

According to the present invention, the use of the cathode active material described in the section "A. Cathode active material" allows the high-voltage hybrid ion battery. Here, the behavior of Li ions and Na ions during charge and discharge in the hybrid ion battery of the present invention is guessed to be as follows. That is to say, in the charge at the first time, the Na ions are desorbed in the cathode active material, and the Li ions existing in the electrolyte layer are stored in the anode active material. Also, in the discharge at the first time, the Li ions and Na ions existing in the electrolyte layer are cointercalated in the cathode active material, and the stored Li ions are released in the anode active material. In addition, in the charge at and after the second time, it is conceived that the intercalated Li ions and Na ions are codesorbed in the cathode active material, and at least the Li ions existing in the electrolyte layer are stored in the anode active material. Also, in the discharge at and after the second time, it is conceived that both of the ions offer the same behavior as the discharge at the first time.

The hybrid ion battery of the present invention is hereinafter described in each constitution.

### 1. Cathode active material layer

The cathode active material layer in the present invention is a layer containing at least the cathode active material, which contains an Na₄₋ₓLiₓM₃(PO₄)₂P₂O₇ crystal phase (0 s x < 4, M is at least one kind of Ni, Co, Mn, Fe, V, Cr, Cu and Zn).

With regard to the Na₄₋ₓLiₓM₃(PO₄)₂P₂O₇ crystal phase, Li ions and Na ions are conceived to be cointercalated thereinto and codesorbed therefrom in accordance with charge and discharge of the hybrid ion battery as described above. Thus, the Na₄₋ₓLiₓM₃(PO₄)₂P₂O₇ crystal phase is conceived to be a crystal phase having an optional composition in which "x" in the general formula satisfies 0 ≤ x < 4. That is to say, it is conceived that "x" satisfies x = 0 before the charge at the first time and "x" satisfies 0 < x < 4 in full charge after the charge at the first time. Such a Na₄₋ₓLiₓM₃(PO₄)₂P₂O₇ crystal phase (0 < x < 4) preferably has a peak in 2θ = 16°, 17°, 32.2° and 34°, for example. Among these peaks, examples of the peak derived from a Na₄M₃(PO₄)₂P₂O₇ crystal phase include a peak which appears in 28 = 16° and 32.2°. Also, examples of the characteristic peak confirmed on the occasion when Li ions are intercalated into the Na₄M₃(PO₄)₂P₂O₇ crystal phase include a peak which appears in 2θ = 17° and 34°. On the other hand, examples of the peak which disappears for the reason that Li ions are intercalated into the Na₄M₃(PO₄)₂P₂O₇ crystal phase include a peak located in 2θ = 9.8°, 23.9° and 37°.

Usually, the value of "x" in the Na₄₋ₓLiₓM₃(PO₄)₂P₂O₇ crystal phase is not particularly limited as long as "x" is 0 or more, but is preferably more than 0, more preferably 0.1 or more, far more preferably 1 or more. On the other hand, usually, the value of "x" is not particularly limited as long as "x" is less than 4, but is preferably 3.9 or less.

Also, M in the Na₄₋ₓLiₓM₃(PO₄)₂P₂O₇ crystal phase is the same as the contents described in the section "A. Cathode active material"; therefore, the description herein is omitted.

The cathode active material layer in the present invention may contain at least one of a conductive material, a binder and a solid electrolyte material as required in addition to the cathode active material described above. Examples of the conductive material include a carbon material. In addition, specific examples of the carbon material include acetylene black, Ketjen Black, carbon black, coke, carbon fiber and graphite. Also, the binder is not particularly limited as long as the binder is stable chemically and electrically, but examples thereof include fluorine-based binders such as polyvinylidene fluoride (PVdF) and polytetrafluoroethylene (PTFE), and rubber-based binders such as styrene-butadiene rubber (SBR). Also, the solid electrolyte material is not particularly limited as long as the material has the desired ion conductivity, but examples thereof include an oxide solid electrolyte material and a sulfide solid electrolyte material. Incidentally, the solid electrolyte material is described in detail in the section "3. Electrolyte layer" discussed below.

The content of the cathode active material in the cathode active material layer is preferably larger from the viewpoint of capacity; preferably, for example within a range of 60% by weight to 99% by weight, above all within a range of 70% by weight to 95% by weight. Also, the content of the conductive material is preferably smaller as long as the material may secure desired electron conduction; preferably, for example within a range of 1% by weight to 30% by weight. Also, the content of the solid electrolyte material is preferably smaller as long as the material may secure desired ion conductivity; preferably, for example within a range of 1% by weight to 40% by weight.

The thickness of the cathode active material layer varies greatly with the constitution of an intended hybrid ion battery, and is preferably within a range of 0.1 µm to 1000 µm, for example.

### 2. Anode active material layer

The anode active material layer in the present invention is a layer containing at least the anode active material. Also, the anode active material is characterized by being an active material capable of storing and releasing Li ions. The anode active material used for the present invention is not particularly limited as long as the anode active material is an active material capable of storing and releasing Li ions, and examples thereof include a metal Li, a Li alloy, metal oxide, metal sulfide, metal nitride, and a carbon material such as graphite. In the present invention, the metal Li and metal oxide are preferable among them. Here, an aspect (a first aspect) in which the anode active material is a metal Li and an aspect (a second aspect) in which the anode active material is lithium titanate (Li₄Ti₅O₁₂(LTO)) as an example of metal oxide are each described.

First, the first aspect is described. The first aspect is an aspect in which a metal Li is used as the anode active material. According to the aspect, the use of the cathode active material described above and a metal Li as the anode active material by combination allows the high-voltage hybrid ion battery. Examples of the anode active material used for a general hybrid ion battery include metallic Na. The oxidation-reduction potential of Li is so lower than the oxidation-reduction potential of Na on the basis of Li that the use in combination with the cathode active material described above allows the hybrid ion battery exhibiting larger potential difference, that is, the higher-voltage hybrid ion battery.

Next, the second aspect is described. The second aspect is an aspect in which LTO as metal oxide is used as the anode active material. According to the aspect, the use of the cathode active material described above and LTO as the anode active material by combination allows the hybrid ion battery with high safety. The reason for improving the safety of the hybrid ion battery is conceived to be that the use of LTO as the anode active material causes Na ions eluted from the cathode active material described above during charge to be precipitated with difficulty on the anode active material.

The anode active material layer in the present invention may further contain at least one of a conductive material, a binder and a solid electrolyte material as required in addition to the anode active material. Incidentally, the conductive material, the binder and the solid electrolyte material used for the anode active material layer are the same as the cathode active material layer. Also, the content of the anode active material, the conductive material, the binder and the solid electrolyte material in the anode active material layer is the same as the cathode active material layer.

The thickness of the anode active material layer varies greatly with the constitution of an intended hybrid ion battery, and is preferably within a range of 0.1 µm to 1000 µm, for example.

### 3. Electrolyte layer

Next, the electrolyte layer in the present invention is described. The electrolyte layer in the present invention is a layer formed between the cathode active material layer and the anode active material layer, and contains at least Li ions. The form of the electrolyte layer is not particularly limited and examples thereof include a liquid electrolyte layer, a gel electrolyte layer and a solid electrolyte layer.

The liquid electrolyte layer is ordinarily a layer obtained by using a liquid electrolyte. In the present invention, the liquid electrolyte may be an aqueous liquid electrolyte or a nonaqueous liquid electrolyte, preferably a nonaqueous liquid electrolyte among them. Also, as described above, the electrolyte layer in the present invention contains at least Li ions, so that the liquid electrolyte ordinarily contains an Li salt and an aqueous solvent or a nonaqueous solvent. Examples of the Li salt include inorganic Li salts such as LiPF₆, LiBF₄, LiClO₄ and LiAsF₆; and organic Li salts such as LiCF₃SO₃, LiN(CF₃SO₂)₂, LiN(C₂F₅SO₂)₂, LiN(FSO₂)₂ and LiC(CF₃SO₂)₃. Also, the aqueous solvent is not particularly limited as long as the solvent contains water as the main component and the Li salt is dissolved therein. In addition, the nonaqueous solvent is not particularly limited as long as the Li salt is dissolved in the solvent. Examples of the high-dielectric-constant solvent include cyclic ester (cyclic carbonate) such as ethylene carbonate (EC), propylene carbonate (PC) and butylene carbonate (BC), γ-butyrolactone, sulfolane, N-methylpyrrolidone (NMP), and 1,3-dimethyl-2-imidazolidinone (DMI). On the other hand, examples of the low-viscosity solvent include chain ester (chain carbonate) such as dimethyl carbonate (DMC), diethyl carbonate (DEC) and ethyl methyl carbonate (EMC), acetate such as methyl acetate and ethyl acetate, and ether such as 2-methyltetrahydrofuran. A mixed solvent formed by mixing the high-dielectric-constant solvent and the low-viscosity solvent may be used. Incidentally, in the present invention, a low-volatile liquid such as an ionic liquid may be used as the nonaqueous liquid electrolyte.

The concentration of the Li salt in the liquid electrolyte is preferably, for example within a range of 0.3 mol/dm³ to 5 mol/dm³, above all within a range of 0.8 mol/dm³ to 1.5 mol/dm³. The reason therefor is that too low concentration of the Li salt brings a possibility of causing capacity reduction during high rate, whereas too high concentration of the Li salt brings a possibility of increasing viscosity to cause capacity reduction at low temperature.

The gel electrolyte layer may be obtained by adding and gelating a polymer to a nonaqueous liquid electrolyte, for example. Specifically, gelation may be performed by adding polymers such as polyethylene oxide (PEO), polyacrylonitrile (PAN) or polymethyl methacrylate (PMMA) to a nonaqueous liquid electrolyte.

The solid electrolyte layer is a layer obtained by using a solid electrolyte material. The solid electrolyte material is not particularly limited as long as the material has the Li ion conductivity, and examples thereof include an oxide solid electrolyte material and a sulfide solid electrolyte material. Examples of the oxide solid electrolyte material include Li₁₊ₓAlₓGe₂₋ₓ(PO₄)₃ (0 ≤ x ≤ 2), Li₁₊ₓAlₓTi₂₋ₓ(PO₄)₃ (0 ≤ x ≤ 2), LiLaTiO (such as Li_{0.34}La_{0.51}TiO₃), LiPON (such as Li_{2.9}PO_{3.3}N_{0.46}) and LiLaZrO (such as Li₇La₃Zr₂O₁₂). On the other hand, examples of the sulfide solid electrolyte material include an Li₂S-P₂S₅ compound, an Li₂S-SiS₂ compound and an Li₂S-GeS₂ compound.

The solid electrolyte material in the present invention may be amorphous or crystalline. Also, the shape of the solid electrolyte material is preferably a particulate shape. Also, the average particle diameter of the solid electrolyte material (D₅₀) is preferably, for example within a range of 1 nm to 100 µm, above all within a range of 10 nm to 30 µm.

The electrolyte layer in the present invention is not particularly limited as long as the electrolyte layer contains at least Li ions, but may further contain Na ions. For example, in the case where the electrolyte layer is the liquid electrolyte layer, the electrolyte layer may further contain an Na salt. Here, examples of the Na salt include inorganic Na salts such as NaPF₆, NaBF₄, NaClO₄ and NaAsF₆; and organic Na salts such as NaCF₃SO₃, NaN (CF₃SO₂)₂, NaN(C₂F₅SO₂)₂, NaN(FSO₂)₂ and NaC(CF₃SO₂)₃. Also, in the case where the electrolyte layer is the solid electrolyte layer, the electrolyte layer may further contain a solid electrolyte material having Na ion conductivity. Here, examples of the oxide solid electrolyte material having Na ion conductivity include Na₃Zr₂Si₂PO₁₂ and β alumina solid electrolyte (such as Na₂O-11Al₂O₃). Also, examples of the sulfide solid electrolyte material having Na ion conductivity include Na₂S-P₂S₅.

The thickness of the electrolyte layer varies greatly with kinds of the electrolyte and constitutions of an intended hybrid ion battery, and is preferably, for example within a range of 0.1 µm to 1000 µm, above all within a range of 0.1 µm to 300 µm.

### 4. Other constitutions

The hybrid ion battery of the present invention comprises at least the anode active material layer, cathode active material layer and electrolyte layer described above, ordinarily further comprising a cathode current collector for collecting the cathode active material layer and an anode current collector for collecting the anode active material layer. Examples of a material for the cathode current collector include SUS, aluminum, nickel, iron, titanium and carbon. On the other hand, examples of a material for the anode current collector include SUS, copper, nickel and carbon. Also, examples of the shape of the cathode current collector and the anode current collector include a foil shape, a mesh shape and a porous shape.

The hybrid ion battery of the present invention may have a separator between the cathode active material layer and the anode active material layer. The reason therefor is to allow the battery with higher safety. Examples of a material for the separator include porous membranes such as polyethylene (PE), polypropylene (PP), cellulose and polyvinylidene fluoride; and nonwoven fabrics such as resin nonwoven fabric and glass fiber nonwoven fabric. Also, the separator may be a single-layer structure (such as PE and PP) or a laminated structure (such as PP/PE/PP). Also, a battery case of a general battery may be used for a battery case used for the present invention. Examples of the battery case include a battery case made of SUS.

### 5. Hybrid ion battery

The hybrid ion battery of the present invention is not particularly limited as long as the battery comprises the cathode active material layer, anode active material layer and electrolyte layer described above. Also, the hybrid ion battery of the present invention may be a primary battery or a secondary battery, preferably a secondary battery among them. The reason therefor is to be repeatedly charged and discharged and be useful as a car-mounted battery, for example. Also, examples of the shape of the hybrid ion battery of the present invention include a coin shape, a laminate shape, a cylindrical shape and a rectangular shape. Also, a producing method of the hybrid ion battery is not particularly limited as long as the method is a method which may produce the hybrid ion battery described above.

Incidentally, the present invention is not limited to the embodiments.

### Examples

The present invention is described more specifically by showing examples hereinafter.

### [Example 1]

### (Synthesis of active material)

Na₄P₂O₇ as a Na source, (CH₃COO)₂Co as a Co source, and NH₄H₂PO₄ and Na₄P₂O₇ as a P source were prepared and mixed to obtain a raw material mixture. Incidentally, they were mixed so that the ratio of Na, Co and P in the raw material mixture was Na : Co : P = 4 : 3 : 4 (molar ratio). The obtained raw material mixture was dissolved with glycolic acid (gelling agent) in a nitric acid aqueous solution, and stirred at a temperature of 80°C. The obtained mixture (gel) was burned under an air atmosphere at a temperature of 700°C for 50 hours. Thus, a cathode active material having an Na₄CO₃ (PO₄) ₂P₂O₇ crystal phase (space group Pn2₁a) was obtained.

### (Production of evaluation battery)

An evaluation battery using the obtained cathode active material was produced. First, the obtained cathode active material, a conductive material (carbon material), and a binder (PVdF) were mixed at cathode active material : conductive material : binder = 75 : 20 : 5 (weight ratio), and dispersed into N-methyl 2-pyrrolidone (NMP) as a dispersant to prepare slurry. Next, the obtained slurry was applied on an aluminum foil as a current collector, dried and rolled to produce a test electrode.

Thereafter, a CR2032-type coin cell was used, the test electrode was used as a working electrode, metal Li was used as a counter electrode, and a microporous membrane separator of polypropylene/polyethylene/polypropylene was used as a separator. A solution where LiPF₆ was dissolved at a ratio of 1.0 mol/dm³ in a solvent, in which ethylene carbonate (EC), dimethyl carbonate (DMC) and ethyl methyl carbonate (EMC) were mixed at EC : DMC : EMC = 3 : 4 : 3 (volume ratio), was used for a liquid electrolyte. Thus, an evaluation battery was obtained.

### [Example 2]

Na₄P₂O₇ as a Na source, (CH₃COO)₂Co as a Co source, (CH₃COO)₂Mn as an Mn source, and NH₄H₂PO₄ and Na₄P₂O₇ as a P source were prepared and mixed to obtain a raw material mixture. Incidentally, they were mixed so that the ratio of Na, Co, Mn and P in the raw material mixture was Na : Co : Mn : P = 4 : 2.4 : 0.6 : 4 (molar ratio). The obtained raw material mixture was dissolved with glycolic acid (gelling agent) in a nitric acid aqueous solution, and stirred at a temperature of 80°C. The obtained mixture (gel) was burned under an air atmosphere at a temperature of 700°C for 50 hours. Thus, a cathode active material having an Na₄Co_{2.4}Mn_{0.6}(PO₄)₂P₂O₇ crystal phase (space group Pn2₁a) was obtained. An evaluation battery was produced by using the obtained cathode active material in the same manner as Example 1.

### [Example 3]

Na₄P₂O₇ as a Na source, (CH₃COO)₂Co as a Co source, (CH₃COO)₂Mn as an Mn source, (CH₃COO)₂Ni as an Ni source, and NH₄H₂PO₄ as a P source were prepared and mixed to obtain a raw material mixture. Incidentally, they were mixed so that the ratio of Na, Co, Mn, Ni and P in the raw material mixture was Na : Co : Mn : Ni : P = 4 : 2.4 : 0.3 : 0.3 : 4 (molar ratio). The obtained raw material mixture was dissolved with glycolic acid (gelling agent) in a nitric acid aqueous solution, and stirred at a temperature of 80°C. The obtained mixture (gel) was burned under an air atmosphere at a temperature of 700°C for 50 hours. Thus, a cathode active material having an Na₄Co_{2.4}Mn_{0.3}Ni_{0.3}(PO₄)₂P₂O₇ crystal phase (space group Pn2₁a) was obtained. An evaluation battery was produced by using the obtained cathode active material in the same manner as Example 1.

### [Example 4]

An evaluation battery was produced in the same manner as Example 1 except for using Li₄Ti₅O₁₂ (LTO) as a counter electrode.

### [Example 5]

An evaluation battery was produced in the same manner as Example 2 except for using Li₄Ti₅O₁₂ (LTO) as a counter electrode.

### [Example 6]

An evaluation battery was produced in the same manner as Example 3 except for using Li₄Ti₅O₁₂ (LTO) as a counter electrode.

### [Evaluations]

### (Charge and discharge test)

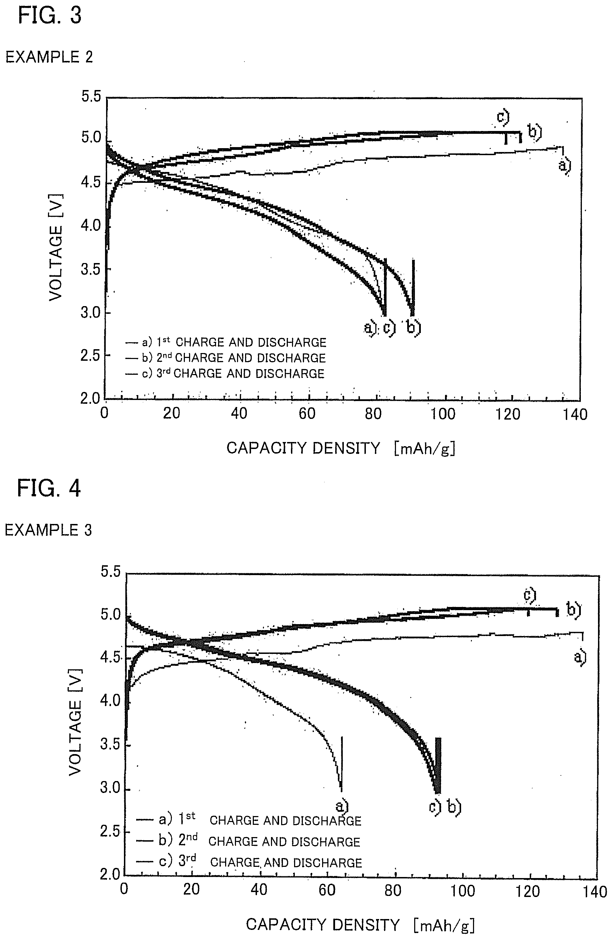

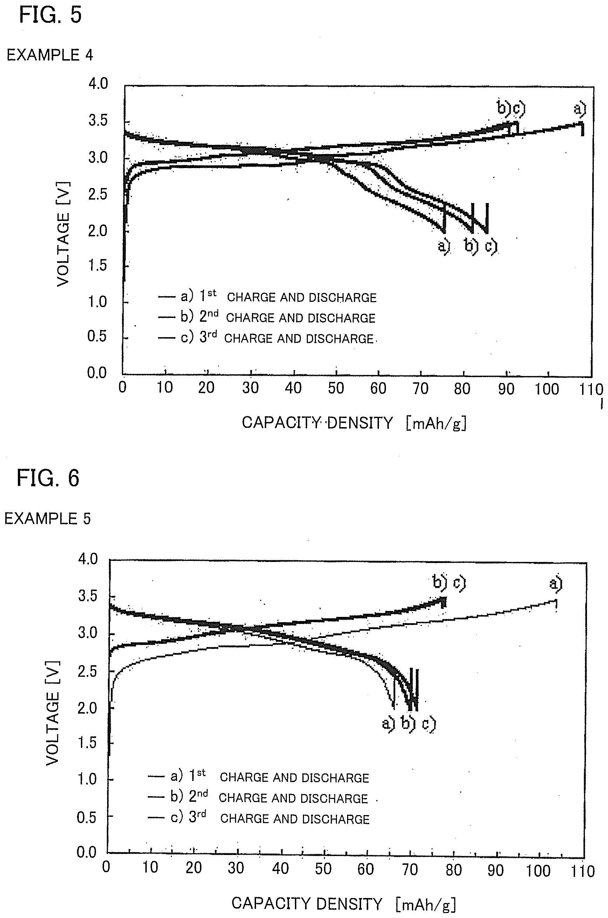

A charge and discharge test was performed for the evaluation battery each obtained in Examples 1 to 6. Incidentally, the number of cycles, current density, and each condition during charge and discharge are as shown in Table 1. The results are shown in FIGS. 2 to 7.

**[Table 1]**

| | Counter Electrode | Number of Cycles | Current Density | Charge | | | Discharge | |
|---|---|---|---|---|---|---|---|---|
| | | | | Upper Limit Voltage | M ode | Time Control | Lower Limit Voltage | M ode |
| Example 1 | Metal Li | 3 | 17 m A/g | - | CC | 6 Hours | 3.0V | CC |
| Example 2 | | 3 | 17 m A/g | 5.1V | CCVV | 8 Hours | 3.0V | CC |
| Example 3 | | 3 | 17 m A/g | 5.1V | CCVV | 8 Hours | 3.0V | CC |
| Example 4 | LT0 | 3 | 17 m A/g | 3.5V | CC | - | 2.0V | CC |
| Example 5 | | 3 | 17 mA/g | 3.5V | CC | - | 2.0V | CC |
| Example 6 | | 3 | 17 mA/g | 3.5V | CC | - | 2.0V | CC |

As shown in FIGS. 2 to 4, it may be confirmed that the cathode active material each obtained in Examples 1 to 3 operated at a high potential. Also, as shown in FIGS. 2 to 7, it may be confirmed that the average voltage was approximately 4.0 V to 4.5 V in the evaluation battery each obtained in Examples 1 to 3, and the average voltage was approximately 2.5 V to 3.0 V in the evaluation battery obtained in Examples 4 to 6. Also, it may be confirmed that the discharge capacity density was approximately 80 mAh/g in the evaluation battery each obtained in Examples 1 to 3, and the discharge capacity density was approximately 70 mAh/g in the evaluation battery each obtained in Examples 4 to 6.

### (XRD measurement)

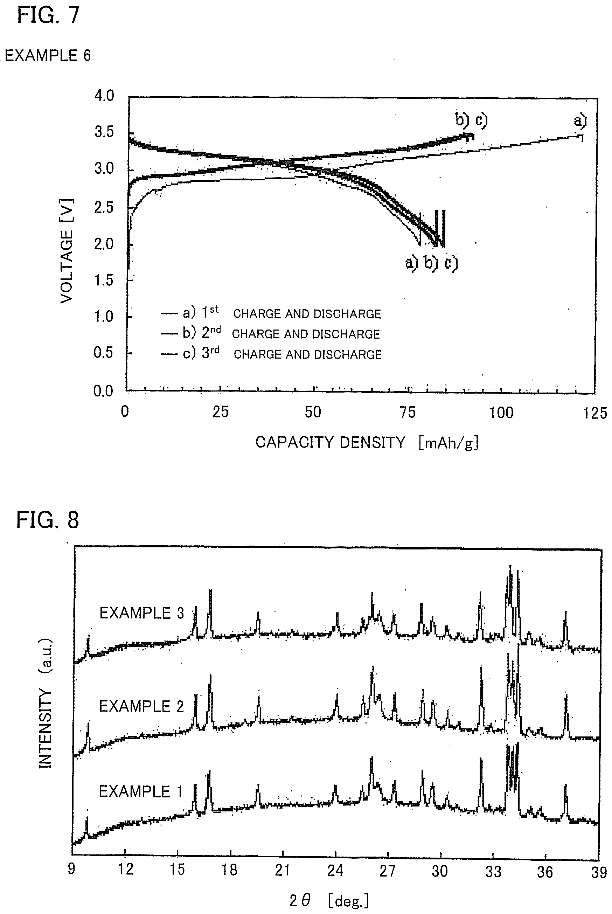

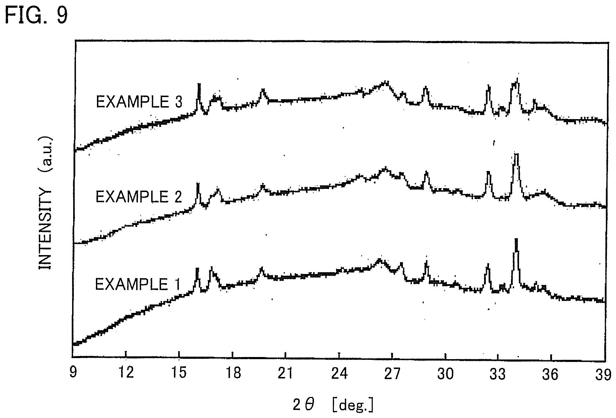

X-ray diffraction (XRD) measurement by a CuKα ray was performed before charge and discharge for the test electrode (working electrode) obtained in each of Examples 1 to 3. The results are shown in FIG. 8. Also, X-ray diffraction (XRD) measurement was performed similarly for the test electrode after performing a two-cycle charge and discharge test on the conditions described in Table 1 in the evaluation battery each obtained in Examples 1 to 3. The results are shown in FIG. 9. Incidentally, the conditions during the measurement are as follows:
Measuring range: 9° to 39°, scanning rate: 10°/min, number of integrations: 5 times.

In FIG. 8, a peak characteristic of the Na₄M₃(PO₄)₂P₂O₇ crystal phase, that is, a peak in a position of 2θ=9.8°, 16°, 17°, 23.9°, 29.5°, 32.2°, 34°, and 37° may be confirmed. Thus, it is conceived that the cathode active material before the charge at the first time has the Na₄M₃(PO₄)₂P₂O₇ crystal phase. On the other hand, in FIG. 9, a peak may be confirmed in a position of 2θ = 16°, 17°, 32.2° and 34°. Thus, it is conceived that the cathode active material after the two-cycle charge and discharge (in full charge) has the Na₄₋ₓLiₓM₃(PO₄)₂P₂O₇ crystal phase (0 < x < 4). Also, through a comparison between FIGS. 8 and 9, for example, a peak which appears in 2θ = 16° and 32.2° among these peaks is conceived to be the peak derived from the Na₄M₃(PO₄)₂P₂O₇ crystal phase. Also, a peak which appears in 2θ = 17° and 34° is conceived to be the characteristic peak confirmed on the occasion when Li ions are intercalated into the Na₄M₃(PO₄)₂P₂O₇ crystal phase. On the other hand, a peak located in 2θ = 9.8°, 23.9° and 37° is conceived to be the peak which disappears for the reason that Li ions are intercalated into the Na₄M₃(PO₄)₂P₂O₇ crystal phase. Through the above, it was confirmed that the Na₄₋ₓLiₓM₃(PO₄)₂P₂O₇ crystal phase in the cathode active material exhibited x = 0 before the charge at the first time and 0 < x < 4 in full charge after the charge at the first time. The reason therefor is conceived to be that Li ions and Na ions are cointercalated thereinto and codesorbed therefrom in accordance with charge and discharge of the battery.

### Reference Signs List

- 1: cathode active material layer
- 2: anode active material layer
- 3: electrolyte layer
- 4: cathode current collector
- 5: anode current collector
- 6: battery case
- 10: hybrid ion battery

## Claims

1. A hybrid ion battery comprising a cathode active material layer containing a cathode active material, an anode active material layer containing an anode active material, and an electrolyte layer formed between the cathode active material layer and the anode active material layer,
**characterized in that** the cathode active material is a cathode active material containing a Na₄M₃(PO₄)₂P₂O₇ crystal phase wherein M is at least one kind of Ni, Co, Mn, Fe, V, Cr, Cu and Zn, the anode active material is an active material capable of storing and releasing Li ions, and
the electrolyte layer contains at least Li ions.

2. The hybrid ion battery according to claim 1, **characterized in that** the anode active material is a Li metal.

3. The hybrid ion battery according to claim 1, **characterized in that** the anode active material is lithium titanate.

4. The hybrid ion battery according to claim 1, **characterized in that** the M is at least one kind of Ni, Co, and Mn.

## Patentansprüche

1. Hybridionenbatterie, umfassend eine aktive Kathodenmaterialschicht, die ein aktives Kathodenmaterial enthält, eine aktive Anodenmaterialschicht, die ein aktives Anodenmaterial enthält, und eine Elektrolytschicht, die zwischen der aktiven Kathodenmaterialschicht und der aktiven Anodenmaterialschicht ausgebildet ist,
**dadurch gekennzeichnet, dass** das aktive Kathodenmaterial ein aktives Kathodenmaterial ist, das eine Na₄M₃(PO₄)₂P₂O₇-Kristallphase enthält, wobei M
wenigstens eines von Ni, Co, Mn, Fe, V, Cr, Cu und Zn ist,
das aktive Anodenmaterial ein aktives Material ist, das Li-Ionen speichern und freisetzen kann, und
die Elektrolytschicht wenigstens Li-Ionen enthält.

2. Hybridionenbatterie nach Anspruch 1, **dadurch gekennzeichnet, dass** das aktive Anodenmaterial ein Li-Metall ist.

3. Hybridionenbatterie nach Anspruch 1, **dadurch gekennzeichnet, dass** das aktive Anodenmaterial ein Lithiumtitanat ist.

4. Hybridionenbatterie nach Anspruch 1, **dadurch gekennzeichnet, dass** das M wenigstens eines von Ni, Co und Mn ist.

## Revendications

1. Accumulateur à ion hybride comprenant une couche de matière active de cathode contenant une matière active de cathode, une couche de matière active d'anode contenant une matière active d'anode, et une couche d'électrolyte formée entre la couche de matière active de cathode et la couche de matière active d'anode,
**caractérisé en ce que** la matière active de cathode est une matière active de cathode contenant une phase de cristal Na₄M₃(PO₄)₂P₂O₇ où M est au moins un type de Ni, Co, Mn, Fe, V, Cr, Cu et Zn,
la matière active d'anode est une matière active capable de stocker et de libérer des ions Li, et
la couche d'électrolyte contient au moins des ions Li.

2. Accumulateur à ion hybride selon la revendication 1, **caractérisé en ce que** la matière active d'anode est un métal de Li.

3. Accumulateur à ion hybride selon la revendication 1, **caractérisé en ce que** la matière active d'anode est le titanate de lithium.

4. Accumulateur à ion hybride selon la revendication 1, **caractérisé en ce que** le M est au moins un type de Ni, Co, et Mn.
